# EUROPEAN PATENT SPECIFICATION

(11) **EP 2 782 750 B1**
(45) Date of publication and mention of the grant of the patent: **20.01.2016**
(21) Application number: 12808501.6
(22) Date of filing: 23.11.2012
(51) Int. Cl.: B32B 3/04, B32B 3/06, B32B 5/18, B32B 27/32, B32B 27/40, B32B 9/04, B32B 9/02, E04F 15/02, E04F 13/08

(54) **REPOSITIONABLE MULTI-LAYER COVERING PANEL, METHOD FOR MANUFACTURING SUCH PANEL AND SURFACE COVERING SYSTEM COMPRISING THE PANEL**
REPOSITIONIERBARE MEHRSCHICHTIGE VERKLEIDUNGSPLATTE, VERFAHREN ZUR HERSTELLUNG DIESER PLATTE UND OBERFLÄCHENABDECKUNGSSYSTEM MIT DER PLATTE
PANNEAU DE REVÊTEMENT MULTICOUCHE REPOSITIONNABLE, PROCÉDÉ DE FABRICATION DE CE PANNEAU ET SYSTÈME DE REVÊTEMENT DE SURFACE COMPRENANT LE PANNEAU

(30) Priority: 24.11.2011 IT VI20110305
(43) Date of publication of application: 01.10.2014
(73) Proprietor: Scamosceria Astico Srl, 36016 Thiene (VI) (IT)
(72) Inventor: BETTANIN, Pietro, I-36030 Sarcedo (VI) (IT)
(74) Representative: Maroscia, Antonio
(86) International application number: PCT/IB2012/056661
(87) International publication number: WO 2013/076692

(56) References cited:
- WO-A1-2008/114124
- WO-A1-2010/083598
- DE-A1- 4 016 288
- FR-A1- 2 816 342
- GB-A- 2 388 338
- US-A- 4 744 189

## Description

### Field of the invention

The present invention generally finds application in the field of surface coverings and particularly relates to a repositionable multilayer covering panel.

The invention further relates to a method of forming a multilayer covering panel of the invention and a covering system comprising such panel.

### Background art

Panels are known to be used, which have an outer layer made of leather, natural or synthetic hides shaped in the form of tiles, slats or the like for covering walls or floors to provide a pleasant aesthetic effect.

Similar panels may be designed to be attached to the surface to be covered in either fixed or movable and possibly repositionable fashion.

For example, FR2816342 discloses a multilayer covering panel for masonry surfaces comprising a substantially rigid polymer or wood support layer covered by a thin upper layer made of a thin hide or leather sheet.

Furthermore, means are provided for removably fastening the panel to the wall, which are arranged on a portion of the back surface of the support layer.

Such removable fastening means consist of a plurality of Velcro® plates or bands arranged on the back surface of the support layer, and designed for connection to a special wall-mounted substrate.

The Velcro® bands are stably secured to the back surface of the support layer by seaming or gluing steps, which might not ensure durability, particularly if the panel is frequently attached and removed to and from the wall.

Furthermore, the fastening bands extend over a limited portion of the support layer, whereby the panel might be inadequately secured to the wall substrate.

Furthermore, the high stiffness of the support layer affects the user's perceived comfort.

Another major drawback is that a high skill is required for gluing the covering layer to the support layer to avoid the formation of blemishes such as creases or wrinkles.

### Disclosure of the invention

The object of the present invention is to overcome the above prior art drawbacks, by providing a repositionable multilayer covering panel that achieves high efficiency and relative cost effectiveness.

A particular object is to provide a repositionable multilayer covering panel that can be simply and quickly attached and removed from an either horizontal or vertical surface to be covered.

A particular object is also to provide a repositionable multilayer covering panel that can form walls, floors or other covering surfaces having high aesthetic qualities and comfort.

A further object of the present invention is to provide a repositionable multilayer covering panel that can be stably and durably attached to an either horizontal or vertical surface to be covered, but still in removable fashion.

Yet another object is to provide a repositionable multilayer covering panel that is relatively flexible, for possible application to non-flat surfaces.

Another important object of the present invention is to provide a method of manufacturing multilayer covering panels having high aesthetic quality and comfort.

These and other objects, are better explained hereafter, are fulfilled by a covering system for covering a surface of a wall or floor using repositionable panels as defined in claim 1.

In a further aspect, the present invention relates to a method of covering a surface of a wall or floor as defined in claim 8.

Advantageous embodiments of the invention are obtained in accordance with the dependent claims.

### Brief description of the drawings

Further features and advantages of the invention will be more apparent upon reading of the detailed description of a preferred, non-exclusive embodiment of a repositionable multilayer covering panel of the invention, which is described as a non-limiting example with the help of the annexed drawings, in which:

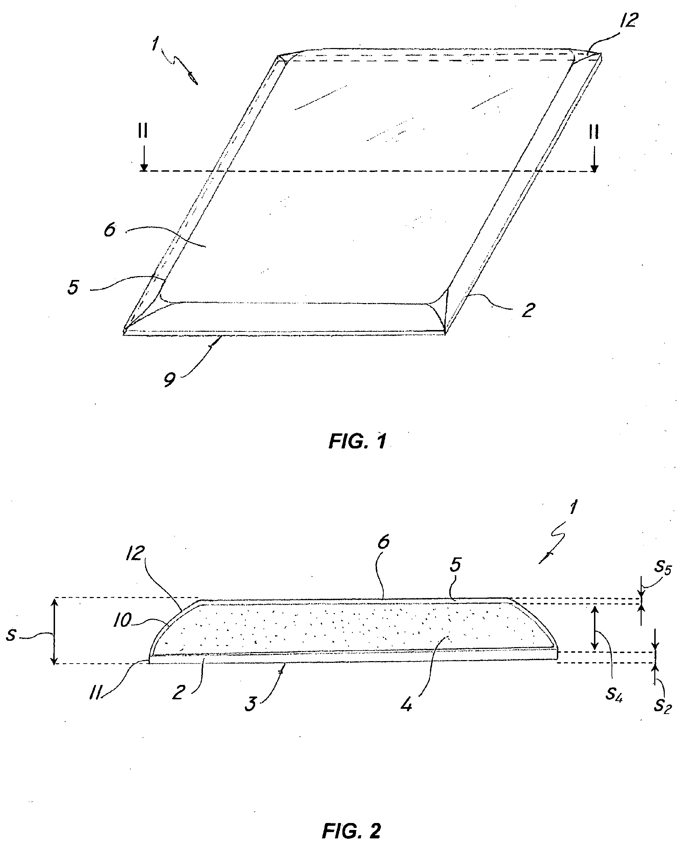

FIG. 1 is a perspective view of a multilayer covering panel of the invention according to a first preferred configuration;
FIG. 2 is a sectional view of the panel of Fig. 1, as taken along the plane *II*-*II*;

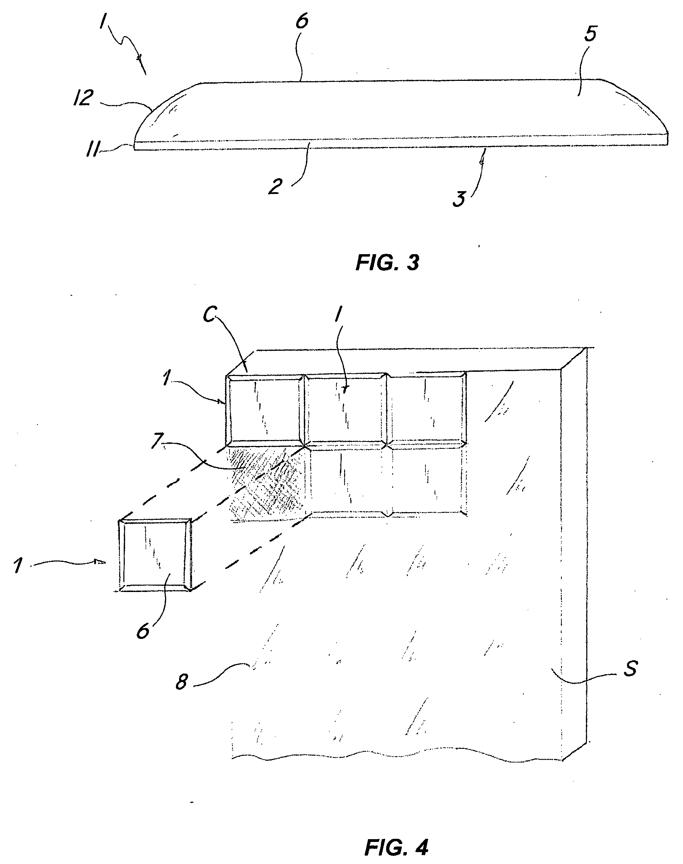

FIG. 3 is a side view of the panel of Fig. 1;
FIG. 4 is a perspective view of a plurality of panels of the invention, attached to a masonry wall;
FIG. 5 is a sectional side view of a multilayer covering panel of the invention according to a second preferred configuration.

### Detailed description of a preferred embodiment

Referring to the accompanying figures, a repositionable multilayer panel, generally designated by numeral 1, may be removably attached to a surface S to be covered, in side-by-side relationship to one or more additional panels, to form a covering C.

The surface S may be either flat or curved and may be oriented either vertically, such as an inner or outer wall of a room, or horizontally, such as a floor.

Namely, the panel 1 may be used as a wall tile, a baseboard, a floor tile.

The panel 1 may be also used to form coverings of support surfaces, such as seats or the like, also in vehicles or boats, or to cover inner and/or outer surfaces of vehicles and boats.

While the figures show a substantially rectangular multilayer panel 1, the latter may be formed into a variety of shapes and sizes, according to its intended use.

According to the present invention, the multilayer panel 1 is composed of a plurality of layers lying one on top of the other in substantially coextensive relationship, and joined together into a single body.

Particularly, the multilayer covering panel 1 comprises a lower anchoring layer 2 made of a first base material having means 3 for quick attachment/removal thereof to the surface to be covered S, at least one intermediate support layer 4 lying on top of the lower anchoring layer 2 and a top covering layer 5 that covers the two former layers 2, 4 and has a top surface 6 defining part of the exposed surface of the covering C.

Particularly, the support layer 4 is made of a relatively elastically compliant second base material, selected from the group comprising polymer materials having high flexibility and elastic compliance, namely a high elastic modulus.

Particularly, the second material may have such an elastic compliance as to allow partial absorption of stresses transmitted by a user, which makes the panel fit for use in flooring.

In a preferred, non-limiting embodiment of the invention, the second polymer material may be selected from the group comprising polythiophene (PT), polyurethane (PU), polyethylene (PE) and the like, possibly in foamed form, and may be also composed of a mixture thereof.

In a particular exemplary embodiment, which does not intend to limit the present invention, the second filling material may be polyurethane foam having a density of nearly 25 kg/m³.

In yet another example, the second filling material may be cross-linked polyethylene foam, having a mass per unit area ranging from 200 g/m² to 400 g/m², e.g. 260 g/m².

Furthermore, two or more intermediate layers may be also provided, made of respective, not necessarily different polymer materials.

These materials both have a high shape memory, allowing them to withstand continuous stresses, and ensure an adequate elasticity and a high molecular stability, affording substantially stable and consistent mechanical and elastic properties of the intermediate support layer 4.

Such materials impart adequate flexibility to the panel 1 and allow it to withstand deformations that make it also suitable for use in covering curved or irregular surfaces.

The covering layer 5 is made of a third material selected from the group comprising natural hides, leather or the like, possibly but not necessarily after one or more typical leather finishing treatments.

Thus, the panel 1 provides both high comfort, due to the second material, and high aeasthetic value, due to the cover made of a valuable material.

Preferably, both the second and third materials have appropriate fire-retardant properties, for the panel 1 to be approved as a Class 1 iM upholstered part, as prescribed in standards UNI9175/87 and UNI9175 FA.

Conveniently, the means 3 for quick attachment/removal of the panel 1 extend all along the lower anchoring layer 2 and may be designed to ensure stable, quick and removable application of the panel 1 to the surface to be covered S a large number of times, thereby allowing repositioning thereof a large number of times.

In a first preferred, non-limiting embodiment of the present invention, the lower anchoring layer 2 may be a fabric made of natural, artificial or synthetic fibers comprising quick attachment means such as Velcro®, tear-away means or the like.

The attachment means 3 so configured are adapted for connection with further complementarily shaped attachment means 7 connected to the surface to be covered S.

For instance, if the attachment means 3 are of Velcro® type, then the surface to be covered S may be at least partially lined with a substrate 8 adapted to define a Velcro® connection or the like with the anchoring fabric layer 2.

The substrate 8 may be already stably applied to the surface to be covered S or supplied with one or more multilayer panels 1 to define the covering system of the invention.

Particularly, the substrate 8 may be applied to the covered surface S by an adhesive, for example and without limitation a water-based *hot-melt* adhesive, directly applied to the substrate 8, a mortar or another material typically used in construction engineering.

Furthermore, the substrate 8 consists of either a single plate of the same size as the final covering, or multiple portions, possibly having the same plan size as the panels 1.

In an alternative embodiment of the invention, the quick attachment means 3 may include an adhesive layer, e.g. made of a water-based *hot melt* adhesive, directly spread on the lower layer 2.

The adhesive may be also of removable and reusable type, to further allow stable repositioning of the panel 1.

Conveniently, the multilayer panel 1 may be comolded from sheet elements 2, 4, 5 made of the first, second and third materials respectively, one on top of the other.

The comolding process provides mutual adhesion of the layers 2, 4 and 5 at a peripheral line that will define the peripheral edge 9 of the panel 1. Furthermore, the comolding process will ensure a much more effective adhesion between the layers 2 than the known gluing processes.

Furthermore, the covering layer 5 will perfectly adhere to the support layer 4, thereby avoiding the formation of blemishes and improving the aesthetic quality of the panel 1.

Conveniently, the peripheral edge 9 of the panel 1 will be specially shaped, preferably flared. Particularly, the comolding process will allow the intermediate support layer 4 to be shaped with a substantially flared peripheral edge 10, substantially entirely covered by the covering layer 5.

The anchoring layer 2 and the top covering layer 5 may be joined together at their respective end edges 11, 12.

Otherwise, the peripheral edge 12 of the covering layer 5 may leave a very thin clear peripheral portion of the support layer 4.

In a preferred, non-limiting embodiment of the present invention, the overall thickness s of the panel 1 may range from 3 mm to 10 mm and preferably from 4 mm to 7 mm.

Furthermore, the intermediate support layer 4 may have a thickness s₄ ranging from 1 mm to 8 mm, preferably from 2 mm to 5 mm, whereas the anchoring layer 2 and the covering layer 5 may have relatively small thicknesses s₂, s₅ respectively, generally not above 1 mm.

In yet another preferred embodiment, the second polymer material that is used to form the support layer 4 is of thermoformable type.

Thus, the panel 1 may be formed by simultaneous thermoforming of three distinct layers 2, 4, 5.

Furthermore, the use of appropriately shaped molds may also provide panels 1 having an irregular exposed surface, with an uneven thickness over its length, to define irregular depth effects or special decorative patterns.

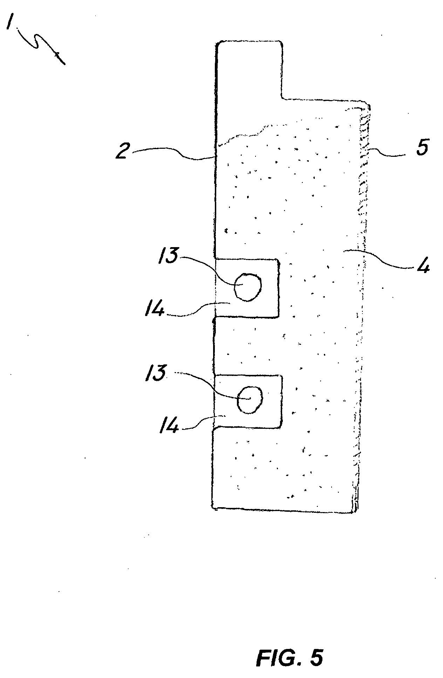

In an alternative embodiment, as shown in the sectional view of Fig. 5, particularly designed for the case in which the panel 1 of the invention is used as a baseboard, the panel 1 may include one or more light sources 13 embedded therein.

Preferably, the light sources 13 will be selected from the group comprising high-efficiency, low-power sources, such as LEDs and the like, to maintain low temperatures and avoid damages to the materials of the panel 1.

Conveniently, the LEDs may be held within special seats 14 formed in one of the layers 2, 4, 5, preferably in the intermediate support layer 4.

The panel 1 will have optically transparent or translucent areas, or even appropriate apertures at the seats 14, to allow the passage of the light beam emitted by the sources 13.

Also, each source 13 may be equipped with respective terminals for connection to a power source, which terminals may be designed for individual connection to the power source or have a common output.

In an alternative embodiment, not shown, the panel 1 may include an electrically conductive film interposed between the outer covering layer 5 and the intermediate support and filling layer 4, not necessarily over the entire surface area thereof.

The electrically conductive film will suitably have electric terminals for connection to the mains or another power source.

This will allow the panel 1 to be associated with one or more spot-like light sources (light spots) in any area of the panel.

For this purpose the light spots, that may be of the currently available type, will have an electrically conductive appendage of micrometric size, adapted to penetrate the covering layer 5 without damaging it, to create an electrical contact with the underlying film.

A preferred, non-limiting method of manufacturing a multilayer covering panel 1 of the invention will comprise first steps of providing first, second and third sheet elements, made of said first, second and third materials respectively.

Such sheet elements will be joined together one on top of the other, to provide an semifinished multilayer product with the second sheet element interposed between the first and second sheet elements.

In the following step, one or more multilayer panels 1 will be formed, by imparting a stress and a strain to the sheet elements, to obtain one or more panels 1 as described above.

It will be appreciated that the number of panels 1 that can be provided by an individual sequence of the above steps will depend on the initial size of the starting sheet elements, as well as the desired size of each panel 1.

The three sheet elements may be designed as single preformed sheets, to be laid one on top of the other to obtain the semifinished product.

However, in a preferred embodiment, the process will start with the third hide or leather sheet element being laid on a work surface, with the surface designed to be the exposed face of the panel facing downwards.

Then, the second material will be spread in a fluid or semifluid state on the upwardly facing surface of the third sheet element, to define the second sheet element, and the two layers will be covered with the first element.

The step of applying the second sheet element may be accomplished by injection or casting of the second polymer material and may possibly involve the use of a mold.

The forming step, which may be a thermoforming step, may be carried out after the step of curing of the polymer material of the second covering element, i.e. after substantially complete polymerization of such material.

The curing step, if any, may be carried out either at room temperature or at relatively high temperatures, according to the type of material.

Preferably, the forming step will be carried out before complete polymerization of the second material, for easier cold-forming thereof.

Furthermore, the forming step may include a step of comolding and possibly thermoforming the above mentioned sheet elements, as well as preferably hot-cutting them along a peripheral line adapted to define the peripheral edge 9 of the panel 1, and may be carried out using a mold or a die, designed to form panels 1 having a substantially flared peripheral edge 9.

The above disclosure clearly shows that the invention fulfills its intended objects and particularly meets the requirement of forming a repositionable multilayer panel that provides coverings having high aesthetic value and high comfort.

The panel, system and method of the invention are susceptible to a number of changes or variants, within the inventive concept disclosed in the annexed claims. All the details thereof may be replaced by other technically equivalent parts, and the materials may vary depending on different needs, without departure from the scope of the invention.

While the panel, system and method have been described with particular reference to the accompanying figures, the numerals are only used for the sake of a better intelligibility of the invention and shall not be intended to limit the claimed scope in any manner.

## Claims

1. A covering system for covering a surface (S) of a wall or floor, comprising a substrate (8) stably attachable to the surface (S) to be covered and one or more multilayer cover panels (1) removably attacheable to said substrate (8), wherein each cover panel (1) comprises:
- a lower anchoring layer (2) made of a first base material having first means (3) for quick attachment/removal to/from the surface (S) to be covered;
- at least one intermediate filling layer (4) made of at least one second base material selected from the group comprising polymeric materials having a predetermined elastic modulus and elastic compliance ;
- a top covering layer (5) made of a third base material selected from the group comprising natural leather and hide;
wherein said substrate (8) comprises second attachment/removal means (7) complementary shaped to said first quick attachment/removal means (3) for allowing fast and removable installation of said panel (1) on the surface (S) to be covered;
**characterized in that** said substrate (8) comprises a plate adapted to be applied to said surface (S), said plate being a single plate having the same size of said surface (S) to be covered or a plurality of plate portions each having a plan size corresponding to the plan shape of each panel (1), said first (3) and said second (7) quick attachment/removal means (3) being selected from the group comprising Velcro®, adhesive and or other tear-away connection means to allow removable application and repositioning of the each cover plate (1) a number of times.

2. System as claimed in claim 1, **characterized in that** said substrate (8) is applied to said surface (S) to be covered by a water based-hot melt adhesive or by a mortar used in construction engineering.

3. System as claimed in claim 1, **characterized in that** intermediate layer (4) is shaped to have a substantially tapered or flared peripheral edge (10), to allow said upper layer (5), said lower layer (2) and said upper layer (5) to be mutually attached along their respective peripheral edges (11, 12) without formation of blemishing and improving the aesthetic quality of each panel (1).

4. System as claimed in claim 3, **characterized in that** said lower anchoring layer (2), said at least one intermediate filling layer (4) and said top covering layer (5) are reciprocally co-moulded or thermoformed using a mold or a die to form said substantially peripheral flared edge (9).

5. System as claimed in claim 1, **characterized in that** said first base material of said lower anchoring layer (2) is a fabric of a natural, artificial or synthetic fibre comprising said quick connection members of the Velcro® type.

6. System as claimed in claim 1, **characterized in that** said at least one second base material of said at least one intermediate filling layer (4) is a polymeric material selected from the group comprising polythiophene (PT), polyurethane (PU), polyethylene (PE).

7. System as claimed in claim 1, **characterized in that** the total thickness (s) of each panel (1) is ranging between 3mm and 10mm and preferably between 4mm and 7mm, said intermediate layer (4) having a thickness (s₄) ranging between 1 mm and 8mm and preferably between 2mm and 5mm.

8. A method of covering a surface (S) of a wall or a floor using the covering system in accordance with any preceding claim, comprising the following step;
a) providing a first laminar element (2) made of a first base material and having first means (3) for quick attachment/removal to/from a surface (S) to be covered;
b) providing at least one second laminar element (4) in at least one second polymeric base material having elastic compliance;
c) providing a third laminar element (5) made of a third base material selected into the group comprising natural leather, hide;
d) attaching said first (2), said at least one second (4) and said third laminar element (5) one on the top of the other;
e) shaping said first (2), said at least one second (4) and said third laminar element (5) to provide one or more multilayer cover panels (1);
f) providing a substrate (8) with second means for quick attachment/removal of said one or more multilayer panels (1);
g) stably attaching said substrate (8) to a wall or floor surface (S) to be covered;
**characterized in that** said substrate (8) is a single plate having the same size of the final covering or a plurality of plate portions each having the same plan size of the cover panels (1), said substrate being applied to said surface (S) by water-based hot melt adhesive or a mortar used in construction engineering, said second (7) quick attachment/removal means (3) being selected from the group comprising Velcro®, adhesive and or other tear-away connection means to allow removable application and repositioning of the each cover plate (1) a number of times.

## Patentansprüche

1. Oberflächenabdeckungssystem zum Abdecken einer Oberfläche (S) einer Wand oder eines Bodens mit einem Trägermaterial (8), das stabil an der zu bedeckenden Oberfläche (S) anbringbar ist und eine oder mehrere mehrschichtige Deckplatten (1), die lösbar anbringbar sind an dem Trägermaterial (8), wobei jede Deckplatte (1) aufweist:
- eine untere Verankerungslage (2), die gefertigt ist aus einem ersten Grundmaterial und erste Einrichtungen (3) aufweist zum schnellen Anbringen/Entfernen an/von der zu bedeckenden Oberfläche (S),
- mindestens eine zwischenliegende Fülllage (4), die gefertigt ist aus einem zweiten Grundmaterial, das ausgewählt ist aus der Gruppe mit polymeren Materialien mit einem vorbestimmten elastischen Modul und elastischer Konformität,
- eine obere Decklage (5), die gefertigt ist aus einem dritten Grundmaterial, das ausgewählt ist aus der Gruppe mit natürlichem Leder und Haut,
- wobei das Trägermaterial (8) zweite Einrichtungen (7) aufweist zum Anbringen/Entfernen, die komplementär sind zu den ersten Einrichtungen (3) zum schnellen Anbringen/Entfernen um schnelle und lösbare Montage der Platte (1) auf der zu bedeckenden Oberfläche (S) zu ermöglichen,
**dadurch gekennzeichnet, dass** das Trägermaterial (8) eine Platte umfasst zum Anbringen an der Oberfläche (S), wobei diese Platte eine einzelne Platte ist mit der selben Größe der zu bedeckenden Oberfläche (S) oder eine Vielzahl von Plattenabschnitten, die jede eine Größe haben, die der ebenen Form von jeder Platte (1) entspricht, wobei die ersten (3) und die zweiten (7) Einrichtungen (3) zum schnellen Anbringen/Entfernen ausgewählt sind aus der Gruppe mit Velcro ®, klebenden und oder anderen Abzieh-Verbindungseinrichtungen, um lösbares Anbringen und Repositionieren von jeder der Deckplatten (1) mehrfach zu ermöglichen.

2. System gemäß Anspruch 1, **dadurch gekennzeichnet, dass** das Trägermaterial (8) auf die zu bedeckende Oberfläche (S) mittels einem auf Wasser basierenden, heiß schmelzenden Klebers oder mittels Mörtel, wie es im Ingenieursbau verwendet wird, angebracht wird.

3. System gemäß Anspruch 1, **dadurch gekennzeichnet, dass** die zwischenliegende Lage (4) geformt ist zu einer im Wesentlichen zugespitzten oder aufgebördelten Randkante (10), um der oberen Lage (5), der unteren Lage (2) und der oberen Lage (5) zu ermöglichen gegenseitig angebracht zu sein entlang ihrer jeweiligen Randkanten (11, 12) ohne Bildung von Verunstaltungen und Verbesserung der ästhetischen Qualität von jeder Platte (1).

4. System gemäß Anspruch 3, **dadurch gekennzeichnet, dass** die untere Verankerungslage (2), die zwischenliegende Fülllage (4) und die obere Decklage (5) reziprok co-geformt oder thermogeformt sind, wobei eine Form oder eine Matrize verwendet wird, um die im Wesentlichen aufgebördelte Randkante (9) zu bilden.

5. System gemäß Anspruch 1, **dadurch gekennzeichnet, dass** das erste Grundmaterial der unteren Verankerungslage (2) ein Gewebe ist aus einer natürlichen, künstlichen oder synthetischen Faser mit den schnellen Verbindungselementen des Velcro®-Typs.

6. System gemäß Anspruch 1, **dadurch gekennzeichnet, dass** mindestens eine zweite Grundmaterial der mindestens einen zwischenliegenden Fülllage (4) ein polymeres Material ist, das ausgewählt ist aus der Gruppe mit Polythiopen (PT), Polyurethan (PU), Polyethylen (PE).

7. System gemäß Anspruch 1, **dadurch gekennzeichnet, dass** die gesamte Dicke (s) von jeder Platte (1) im Bereich zwischen 3 mm und 10 mm und vorzugsweise zwischen 4 mm und 7 mm liegt, wobei die zwischenliegende Lage (4) eine Dicke (s₄) hat, die im Bereich zwischen 1 mm und 8 mm und vorzugsweise zwischen 2 mm und 5 mm liegt.

8. Verfahren zum Bedecken einer Oberfläche (S) einer Wand oder eines Bodens unter Verwendung eines Oberflächenabdeckungssystems gemäß einem vorhergehenden Anspruch, mit den folgenden Schritten:
a) Bereitstellen eines ersten flächigen Elements (2), das gefertigt ist aus einem ersten Grundmaterial und erste Einrichtungen (3) aufweist zum schnellen Anbringen/Entfernen an/von der zu bedeckenden Oberfläche (S),
b) Bereitstellen mindestens eines zweiten flächigen Elements (4) in mindestens einem zweiten, polymeren Grundmaterial mit elastischer Konformität,
c) Bereitstellen eines dritten flächigen Elements (5), das gefertigt ist aus einem dritten Grundmaterial, das ausgewählt ist aus der Gruppe mit natürlichem Leder und Haut,
d) Anbringen des ersten (2), des mindestens einen zweiten (4) und des dritten flächigen Elements (5), jeweils eines über dem Anderen,
e) Formen des ersten (2), des mindestens einen zweiten (4) und des dritten flächigen Elements (5), um ein oder mehrere mehrlagige Deckplatten (1) bereit zu stellen,
f) Bereitstellen eines Trägermaterials (8) mit zweiten Einrichtungen zum schnellen Anbringen/Entfernen dieser einen oder mehreren mehrlagigen Deckplatten (1),
g) stabiles Anbringen des Trägermaterials (8) an eine zu bedeckende Wand- oder Bodenfläche (S),
**dadurch gekennzeichnet, dass** das Trägermaterial (8) eine einzelne Platte ist mit der selben Größe der endgültigen Abdeckung oder eine Vielzahl von Plattenabschnitten, die jede die selbe ebene Größe der Deckplatten (1) haben, wobei das Trägermaterial auf die Oberfläche (S) mittels einem auf Wasser basierenden, heiß schmelzenden Klebers oder mittels einem Mörtel, wie es im Ingenieursbau verwendet wird, angebracht wird und die zweiten (7) Einrichtungen (3) zum schnellen Anbringen/Entfernen ausgewählt sind aus der Gruppe mit Velcro ®, klebenden und oder anderen Abzieh-Verbindungseinrichtungen, um lösbares Anbringen und Repositionieren von jeder der Deckplatten (1) mehrfach zu ermöglichen.

## Revendications

1. Système de revêtement pour revêtir une surface (S) d'un mur ou d'un plancher, comprenant un substrat (8) pouvant être fixé de façon stable à la surface (S) à revêtir et un ou plusieurs panneaux de revêtement multicouche (1), pouvant être fixés audit substrat (8), dans lequel chacun des panneaux de revêtement (1) comprend :
- une couche d'ancrage inférieure (2) constituée d'un premier matériau de base ayant de premiers moyens (3) de fixation/retrait rapide sur/à partir de la surface (S) à revêtir ;
- au moins une couche de remplissage intermédiaire (4) constituée d'au moins un deuxième matériau choisi dans le groupe des matériaux polymères ayant un module d'élasticité et une compliance élastique prédéterminés ;
- une couche de revêtement supérieure (5) constituée d'un troisième matériau de base, choisi dans le groupe comprenant les peaux naturelles et le cuire ;
dans lequel ledit substrat (8) comprend de seconds moyens de fixation/retrait (7) de forme complémentaire à celle desdits premiers moyens de fixation/retrait rapide (3), pour permettre une installation rapide et démontable dudit panneau (1) sur la surface (S) à revêtir ;
**caractérisé en ce que** ledit substrat (8) comprend une plaque conçue pour être appliquée à ladite surface (S), ladite plaque étant une seule plaque ayant les mêmes dimensions que ladite surface (S) à revêtir ou une pluralité de parties de plaque, ayant chacune des dimensions en plan correspondant à la forme en plan de chaque panneau (1), lesdits premiers (3) et lesdits seconds (7) moyens de fixation/retrait rapide (3) étant choisis dans le groupe comprenant le Velcro®, des moyens adhésifs et/ou d'autres moyens de liaison arrachables, pour permettre l'application amovible et le repositionnement de chaque plaque de revêtement (1) un certain nombre de fois.

2. Système selon la revendication 1, **caractérisé en ce que** ledit substrat (8) est appliqué à ladite surface (S) à revêtir au moyen d'un adhésif hot-melt à base d'eau ou d'un mortier de construction.

3. Système selon la revendication 1, **caractérisé en ce que** la couche intermediaire (4) est façonnée de manière à comporter un bord périphérique sensiblement effilé ou évasé (10), pour permettre la fixation de ladite couche supérieure (5), de ladite couche inférieure (2) et de ladite couche supérieure l'une avec l'autre le long de leurs bords périphériques respectifs (11, 12) sans aucun défaut, et avec une meilleure qualité esthétique de chaque panneau (1).

4. Système selon la revendication 3, **caractérisé en ce que** ladite couche d'ancrage inférieure (2), ladite au moins une couche de remplissage intermédiaire (4) et la dite couche de revêtement supérieure (5) sont co-moulées ou thermoformées au moyen d'une moule ou d'une matrice pour former ledit bord évasé sensiblement périphérique (9).

5. Système selon la revendication 1, **caractérisé en ce que** ledit premier matériau de base de ladite couche d'ancrage inférieure (2) est un tissu de fibres naturelles, artificielles ou synthétiques comprenant lesdits organes de liaison de type Velcro®.

6. Système selon la revendication 1, **caractérisé en ce que** ledit au moins deuxième matériau de base de ladite au moins une couche de remplissage intermédiaire (4) est un matériau polymère choisi dans le groupe comprenant polythiophène (PT), polyuréthane (PU), polyéthylène (PE).

7. Système selon la revendication 1, **caractérisé en ce que** l'épaisseur totale (s) de chaque panneau (1) varie entre 3 mm et 10 mm, de préférence entre 4 mm et 7 mm, ladite couche intermédiaire (4) ayant une épaisseur (s₄) variant entre 1 mm et 8 mm, de préférence entre 2 mm et 5 mm.

8. Procédé de revêtement d'une surface (S) d'un mur ou d'un plancher avec le système de revêtement selon n'importe laquelle des revendications précédentes, comprenant les étapes suivantes :
a) mettre en oeuvre un premier élément laminaire (2) constitué d'un premier matériau de base ayant de premiers moyens (3) de fixation/retrait rapide sur/à partir d'une surface (S) à revêtir ;
b) mettre en oeuvre au moins un deuxième élément laminaire (4) constitué d'au moins un deuxième matériau polymère de base ayant des caractéristiques de compliance élastique ;
c) mettre en oeuvre un troisième élément laminaire (5) constitué d'un troisième matériau de base, choisi dans le groupe comprenant les peaux naturelles et le cuire ;
d) fixer ledit premier (2), ledit au moins deuxième (4) et ledit troisième (5) éléments laminaires l'un au-dessus de l'autre ;
e) façonner ledit premier (2), ledit au moins deuxième (4) et ledit troisième (5) éléments laminaires de manière à obtenir un ou plusieurs panneau de revêtement multicouche (1) ;
f) mettre en oeuvre un substrat (8) avec de seconds moyens de fixation/retrait rapide (3) desdits un ou plusieurs panneaux multicouche (1) ;
g) fixer de façon stable ledit substrat (8) à une surface de mur ou de plancher (S) à revêtir ;
**caractérisé en ce que** ledit substrat (8) est une seule plaque ayant les mêmes dimensions que le revêtement final ou une pluralité de parties de plaque, ayant chacune les mêmes dimensions en plan que les panneaux de revêtement (1), ledit substrat étant appliqué à ladite surface (S( par un adhésif hot-melt à base d'eau ou un mortier de construction, lesdits seconds (7) moyens de fixation/retrait rapide (3) étant choisis dans le groupe comprenant le Velcro@, des moyens adhésifs et/ou d'autres moyens de liaison arrachables, pour permettre l'application amovible et le repositionnement de chaque plaque de revêtement (1) un certain nombre de fois.
